# EUROPEAN PATENT APPLICATION

(11) **EP 4 541 563 A1**
(43) Date of publication of application: **23.04.2025**
(21) Application number: 23203970.1
(22) Date of filing: 17.10.2023
(51) Int. Cl.: B29C 70/00, B29B 15/10, B29C 70/02, B29C 70/46, B29C 70/50, B29C 70/86, B32B 5/02

(54) **PROCESS FOR MANUFACTURING A CORE MATERIAL FOR THIN-WALLED FIBER-REINFORCED PRODUCTS**

(71) Applicant: Lighterials VoF, 3452 LH Vleuten (NL)
(72) Inventor: VISSHER, Edze, 3452 LH Vleuten (NL); BLEEKER, Jeroen, 8307 ND Ens (NL)
(74) Representative: CPW GmbH

(57) **Abstract**

A process for manufacturing a core material for thin-walled fiber-reinforced plastic products is provided, wherein a nonwoven comprising fibers and hollow particles is provided, which is penetrated with molten thermoplastic polymer resin. The core material can subsequently be laminated with skin material layers to form fiber-reinforced thermoplastic products, which can be molded into a desired geometry.

## Description

The invention pertains to a process for manufacturing a core material, in particular for thin-walled fiber-reinforced products.

Fiber-reinforced (plastic) products are composite materials based on a polymer resin, which can be a thermoset polymer resin or a thermoplastic polymer resin, and reinforcing fibers such as for example, but not limited to, glass or carbon. Fiber-reinforced products find applications in a large variety of fields such as automotive, aviation, wind turbines, boats, industrials parts, and the like. The presence of the reinforcing fibers in the polymer resin enables to provide increased strength, stiffness, durability, in particular resistance against fatigue failure, fracture toughness, environmental resistance, increased temperature stability, reduced weight, and the like, in the (plastic) products.

Using a thermoplastic polymer resin instead of a thermoset polymer resin as a matrix polymer in fiber-reinforced products has the advantage that the product can be formed by melting the thermoplastic polymer resin instead of forming by curing a thermoset polymer resin, and higher processing speeds can be obtained. Fiber-reinforced plastic products comprising a thermoplastic polymer resin as a matrix polymer can be reused and recycled more easily, for example by remelting the plastic product, than fiber-reinforced plastic products comprising a thermoset polymer resin as a matrix polymer.

In the case that short reinforcement fibers are used, fiber-reinforced thermoplastic products can be manufactured by extrusion-based processes, and in the case that continuous reinforcement fibers are used, thermoplastic fiber-reinforced products can, for example, be manufactured by melt press lamination processes. In melt press lamination processes, pre-manufactured fiber-reinforced polymer tapes or sheets are bonded together, optionally with a core material, to form laminates, which can be thermoformed, potentially followed by a polymer overmolding process. In an overmolding process additional thermoplastic polymer resin is added to a fiber-reinforced polymer sheet in an injection molding process. Forming of the fiber-reinforced product can be done in a single step by supplying a fiber-reinforced polymer sheet in the mold of an injection molding machine.

To reduce material weight and/or to increase bending stiffness of plastic products, low density core materials are used in fiber-reinforced plastic products. The core materials are commonly laminated with skin material layers on both sides of the core material. Common core materials include rigid thermoplastic foams, for example made from polyethylene terephthalate (PET), polyvinylchloride (PVC), polyurethane (PUR) or polymethacrylimide (PMI), honeycombs and textile-based foams. Preconditions of proper functioning of a core material are good core integrity and sufficient bonding of the core material to the skin material layers.

Complex thermoforming of laminates comprising a core material is difficult due to the generally high stiffness of such laminates, in particular when the core material includes for example a foam or a honeycomb.

The use of core materials in thermoset fiber-reinforced plastic products, for example in hand-lay-up and vacuum infusion processes, is known in the art. Due to the low viscosity of thermoset polymer resins during processing before curing, thermoset polymer resins can easily penetrate into dry skin material layers, also known as dry reinforcements layers, and into dry core materials, thereby achieving good bonding with the core material and the skin material layers without the use of an additional adhesive process step. Precondition is that the core material provides a certain porosity at the surface wherein the thermoset resin can penetrate to connect the core material and the skin material layers together.

WO 2012163690 A1 discloses a foam core comprising surface structures to provide improved bonding with a thermoset polymer resin and other material layers.

The use of core materials in fiber-reinforced thermoplastic products is less straight forward, especially in the case of continuous fiber-reinforced plastic products. Due to the high viscosity of thermoplastic polymer resins in a fluid or molten state, mainly pre-impregnated reinforcement layers like UD-tapes, sheets, or woven structures, also called organosheets, are used as semi-finished intermediate products in forming processes of the fiber-reinforced thermoplastic products. Application of low-density core materials in fiber-reinforced thermoplastic products can be beneficial for weight reduction and/or for increase of bending stiffness. However, as there is hardly any flow of polymer resin into the core material during press lamination processes, bonding of the core material to skin material layers can be critical. Moreover, in these cases the core material should have sufficient integrity by itself and sufficient pressure resistance at the fixation temperature of the skin material layers during lamination of the skin material layers to the core material, which is generally well above the melting point of material comprised in the skin material layers, in order to survive the lamination process. This is often in conflict with the fact that physical bonding at the interface between the core material and the skin material layer only occurs if the core material is made of a polymer resin that is compatible with the polymer resin of the skin material layer.

To obtain mechanical bonding between the core material and the skin material layer, openings in the surface of the core material are needed, but still there should also be enough polymer resin available which is able to flow into these openings, which is however generally not the case. Therefore, special measures have to be taken, such as for example the use of an additional adhesive layer between the core material and the skin material layer, thereby introducing additional raw material, additional process steps, adding manufacturing complexity, and adding costs.

US 11,192,316 and US 11,267,212 disclose thermoplastic honeycomb structures that can be used in thermoplastic composites.

Rigid foam cores often lose their performance when they are molded in complex geometries and sharp-edged bends of the fiber-reinforced plastic products. For less complex and more flat shaped composite structures having a thickness above 4 mm, thermoplastic honeycombs, or foams, for example made from polyethylene terephthalate (PET) or polymethacrylimide (PMI), are readily available having a thickness of 3 mm or more. However, thermoplastic honeycombs or foams having a thickness of less than 3 mm are more difficult to manufacture and are generally expensive. Thermoplastic foams can be sliced into separate layers of smaller thickness, but disadvantages as described above are still present and the additional processing step of slicing adds additional costs.

Although most high-performance thermoplastic foam cores can be thermoformed together with thermoplastic reinforcement layers, there are limitations in polymer resins with which such high-performance foams can be made, and bonding of the skin material layers to the thermoplastic foam core can be critical. Special thermoplastic foam cores have been developed for application in thermoplastic composites. CN105082690A for example discloses a polymethacrylimide (PMI) based foam core.

Polyolefin-based foam cores, for example made from polypropylene, that are expanded by blowing agents, may collapse when subjected to lamination pressures and temperatures as commonly applied in lamination process for thermoplastic composites and are therefore difficult to apply as a weight saving core layer in fiber-reinforced plastic products.

Thinner fiber-reinforced plastic products, like body panels, or other products having complex geometries, can benefit from the use of low-density core materials, for example from weight reduction perspective. Such structures are often called microsandwiches. However, for thin fiber-reinforced plastic products, core materials having a thickness of less than 3 mm are less commonly available.

Textile-based core materials are available having a thickness below 3 mm, but do not have sufficient integrity without penetration of a polymer resin as a matrix, and these textile-based core materials are without further treatments only usable in manufacturing processes for fiber-reinforced thermoset products, i.e. where they are impregnated with thermoset polymer resin.

There thus remains a need for improved core materials for fiber-reinforced products, in particular for thin-walled fiber-reinforced products, in particular there remains a need for improved core materials for fiber-reinforced thermoplastic products, in particular for thin-walled fiber-reinforced thermoplastic products.

The object of the invention is thus to provide an improved core material for fiber-reinforced products, in particular for thin-walled fiber-reinforced products, and to provide a process for manufacturing such an improved core material for fiber-reinforced thermoplastic products.

The object is solved by the process for manufacturing a core material of claim 1 and by the core material of claim 12.

Advantageous further improvements of the process for manufacturing a core material and of the core material are provided by the dependent claims.

A process for manufacturing a core material for thin-walled fiber-reinforced products comprising the steps of providing a nonwoven material layer having a first surface and a second surface, the nonwoven material layer comprising fibers and hollow particles, and optionally other enclosed cavities, penetrating the first surface of the nonwoven material layer with a first thermoplastic polymer resin, melting the first thermoplastic polymer resin, and solidifying the molten first thermoplastic polymer resin to form the core material, enables to provide a core material, which can advantageously be used as a core material in fiber-reinforced products, in particular in thin-walled fiber-reinforced products. The process particularly enables to provide a core material, which can advantageously be used as a core material in fiber-reinforced thermoplastic products, in particular in thin-walled fiber-reinforced thermoplastic products.

The hollow particles, and optionally other enclosed cavities, may be incorporated in the nonwoven material layer, whereby the hollow particles and the optionally other enclosed cavities are located between fibers comprised in the nonwoven material layer, thereby preventing, or at least reducing, loss of hollow space in the core material during processing due to cavities and/or hollow particles collapsing, compressing, moving or falling out of the nonwoven material layer. As the hollow particles and the optionally other enclosed cavities are located between fibers, the movement of the hollow particles may mechanically be restricted by the fibers surrounding the hollow particles and cavities.

Preferably, the hollow particles may be physically, mechanically and/or chemically bonded to the fibers comprised in the nonwoven material layer and thereby other enclosed cavities may be formed by the bonding process. The hollow particles may be physically bonded to the fibers, by applying a chemical binder. The hollow particles may be physically bonded to the fibers by thermal bonding, preferably using a thermoplastic polymer resin.

The process may comprise the steps of penetrating the second surface of the nonwoven material layer with a second thermoplastic polymer resin, melting the second thermoplastic polymer resin, and solidifying the molten second thermoplastic polymer resin. Penetrating the nonwoven material layer through both surfaces with thermoplastic polymer resin, enables to improve the penetration of the nonwoven material layer with thermoplastic polymer resin, in particular the penetration depth of thermoplastic polymer into the nonwoven material layer and filling spaces with non-enclosed cavities and around hollow particles in the nonwoven layer.

The process may comprise the steps of melting the first thermoplastic polymer resin, subsequently penetrating the first surface of the nonwoven material layer with the molten first thermoplastic polymer resin, and solidifying the molten first thermoplastic polymer resin.

The process may comprise the steps of providing a first film comprising the first thermoplastic polymer to the first surface of the nonwoven material layer, melting the first thermoplastic polymer resin, subsequently penetrating the first surface of the nonwoven material layer with the molten first thermoplastic polymer resin, and solidifying the molten first thermoplastic polymer resin.

The process may comprise the steps of extrusion coating the first surface of the nonwoven material layer with a molten first thermoplastic polymer, subsequently penetrating the first surface of the nonwoven material layer with the molten first thermoplastic polymer resin, and solidifying the molten first thermoplastic polymer resin.

The process may comprise the steps of melting the second thermoplastic polymer resin, subsequently penetrating the second surface of the nonwoven material layer with the molten second thermoplastic polymer resin, and solidifying the molten second thermoplastic polymer resin.

The process may comprise the steps of providing a second film comprising the second thermoplastic polymer to the second surface of the nonwoven material layer, melting the second thermoplastic polymer resin, subsequently penetrating the second surface of the nonwoven material layer with the molten second thermoplastic polymer resin, and solidifying the molten second thermoplastic polymer resin.

The process may comprise the steps of simultaneously providing the first film comprising the first thermoplastic polymer to the first surface of the nonwoven material layer, and providing the second film comprising the second thermoplastic polymer to the second surface of the nonwoven material layer.

The process may comprise the steps of extrusion coating the second surface of the nonwoven material layer with a molten second thermoplastic polymer, subsequently penetrating the second surface of the nonwoven material layer with the molten second thermoplastic polymer resin, and solidifying the molten second thermoplastic polymer resin.

The process may comprise the steps of simultaneously extrusion coating the first surface of the nonwoven material layer with a molten first thermoplastic polymer and extrusion coating the second surface of the nonwoven material layer with a molten second thermoplastic polymer.

The process may comprise the steps of simultaneously penetrating the first surface of the nonwoven material layer with the molten first thermoplastic polymer resin and penetrating the second surface of the nonwoven material layer with the molten second thermoplastic polymer resin, wherein the process preferably comprises the step of simultaneously solidifying the molten first thermoplastic polymer resin and solidifying the molten second thermoplastic polymer resin.

The process may comprise the steps of penetrating the first surface of the nonwoven material layer with the first molten thermoplastic polymer resin and/or penetrating the second surface of the nonwoven material layer with the second molten thermoplastic polymer resin, and applying a force on the molten thermoplastic polymer resin(s), to improve the penetration of molten thermoplastic polymer resin into the nonwoven material layer, in particular the penetration depth of thermoplastic polymer into the nonwoven material layer.

The process may comprise the step of applying gravity and/or applying a force by applying pressure, preferably by a pressure roller, and/or by applying a force by a vacuum pressure difference on the molten thermoplastic polymer resin(s).

The process may comprise the steps of penetrating the first surface of the nonwoven material layer with the first thermoplastic polymer resin in a solid state, preferably with the first thermoplastic polymer resin as a powder, subsequently melting the first thermoplastic polymer resin penetrated into the first surface of the nonwoven material layer, and solidifying the molten first thermoplastic polymer resin.

The process may comprise the steps of penetrating the second surface of the nonwoven material layer with the second thermoplastic polymer resin in a solid state, preferably with the second thermoplastic polymer resin as a powder, subsequently melting the second thermoplastic polymer resin penetrated into the second surface of the nonwoven material layer, and solidifying the molten second thermoplastic polymer resin.

The process may comprise the step of simultaneously penetrating the first surface of the nonwoven material layer with the first thermoplastic polymer resin in a solid state and penetrating the second surface of the nonwoven material layer with the second thermoplastic polymer resin in a solid state.

The process may comprise the steps of penetrating the first surface of the nonwoven material layer with the first thermoplastic polymer resin in a solid state and/or penetrating the second surface of the nonwoven material layer with the second thermoplastic polymer resin in a solid state, and applying a force on the thermoplastic polymer resin(s) in a solid state, to improve the penetration of thermoplastic polymer resin in a solid state into the nonwoven material layer, in particular the penetration depth and/or the penetration regularity of thermoplastic polymer into the nonwoven material layer. The process may comprise the step of applying gravity and/or applying a force by applying pressure and/or by applying a force by a vacuum pressure difference on the thermoplastic polymer resin(s) in a solid state. The process may comprise the step of applying a force on the thermoplastic polymer resin(s) in a solid state by applying alternating electric fields. In the process, the second thermoplastic polymer resin in a solid state may be provided on a conveyor belt or in an open repository below the nonwoven material layer.

The process may comprise the step of simultaneously melting the first thermoplastic polymer resin penetrated into the first surface of the nonwoven material layer in a solid state and melting the second thermoplastic polymer resin penetrated into the second surface of the nonwoven material layer in a solid state, wherein the process preferably comprises the step of simultaneously solidifying the molten first thermoplastic polymer resin and solidifying the molten second thermoplastic polymer resin.

In the process, the nonwoven material layer comprising fibers and hollow particles may advantageously have a thickness of at least 0.5 mm and at most 3.0 mm, determined according to DIN EN ISO 9073-2. However, in the process, the nonwoven material layer comprising fibers and hollow particles may have an initial thickness up to 10 mm, and the thickness may advantageously be reduced by compression to a thickness in the range of 0.5 mm to 3 mm.

The nonwoven material layer comprising fibers and hollow particles comprised in the core material may advantageously have a thickness of at most 3.0 mm, or at most 2.5 mm, or at most 2.0 mm, or a most 1.5 mm, or at most 1.0 mm.

The nonwoven material layer comprising fibers and hollow particles comprised in the core material may advantageously have a thickness of at least 0.5 mm, or at least 1.0 mm, or at least 1.5 mm, or at least 2.0 mm, or at least 2.5 mm.

The process provides a core material that can be applied in processes to manufacture fiber-reinforced products, in particular for thin-walled fiber-reinforced products. The process can advantageously provide a core material that can be applied in processes to manufacture fiber-reinforced thermoplastic products, in particular for thin-walled fiber-reinforced thermoplastic products.

The process can advantageously provide a core material for a fiber-reinforced plastic thermoplastic product with a low density and/or a high bending stiffness. The density of the fiber-reinforced plastic product comprising the core material provided by the process is significantly lower as compared to a plastic product comprising a solid layer of thermoplastic polymer resin, or as compared to monolithic laminates consisting of multiple layers of carbon fibers, for example of eight layers of carbon fibers.

In the process, the core material may have a density of 100 kg/m3 to 900 kg/m3, which can be calculated from the arial weight and thickness of the core material. The core material may preferably have a density in the range of 200 kg/m3 to 800 kg/m3, or in the range of 250 kg/m3 to 700 kg/m3.

The core material may also provide the fiber-reinforced product, preferably the fiber-reinforced thermoplastic product, with an improved surface quality, improved impact resistance, improved damage tolerance, improved noise insulation and/or improved electrical insulation, while the mechanical properties of the fiber-reinforced product and the delamination strength between the core material and the skin material layers remain on an acceptable level. The nonwoven material layer comprising fibers and hollow particles, and optionally other enclosed cavities, comprised in thermoplastic polymer resin as matrix polymer has a flexibility which is sufficient to smoothen print patterns of reinforcement layers comprised in the skin material layers laminated to the core material, and can prevent, or at least reduce, crack formation, and can improve ductility of the core material as compared to monolithic laminates constructions, which are relatively brittle.

In the process, the first thermoplastic polymer resin penetrating into the first surface of the nonwoven material layer may be any thermoplastic polymer resin, but the first thermoplastic polymer resin is preferably configured to provide compatibility with the nonwoven material layer and to ensure physical bonding with a skin material layer during the process of manufacturing a fiber-reinforced product, preferably a fiber-reinforced thermoplastic product, in particular in a press lamination process.

In the process, the second thermoplastic polymer resin penetrating into the second surface of the nonwoven material layer may be any thermoplastic polymer resin, but the second thermoplastic polymer resin is preferably configured to provide compatibility with the nonwoven material layer and to ensure physical bonding with a skin material layer during the process of manufacturing a fiber-reinforced product, preferably a fiber-reinforced thermoplastic product, in particular in a press lamination process.

The process may comprise the steps of providing a first film comprising the first thermoplastic polymer to the first surface of the nonwoven material layer and providing a second film comprising the second thermoplastic polymer to the second surface of the nonwoven material layer to form an intermediate layered structure, and subjecting the intermediate layered structure to a pressure and a temperature for melting the first thermoplastic polymer of the first film and melting the second thermoplastic polymer of the second film, and pressing the first molten thermoplastic polymer into the first surface of the nonwoven material layer and pressing the molten second thermoplastic polymer of the second film into the second surface of the nonwoven material layer.

The nonwoven material layer comprising, preferably thermoplastic, fibers and hollow particles, and optionally other enclosed cavities, which are preferably bonded to the fibers, may have been prefabricated prior to providing the nonwoven material layer into the process. By separating the manufacture of the nonwoven material layer comprising the, preferably thermoplastic, fibers and the hollow particles, and optionally other enclosed cavities, from the process for manufacturing the core material, penetrating the nonwoven material layer with thermoplastic polymer resin, improved properties are obtained in the core material than is readily available in industry.

By selecting specific hollow particles, nonwoven fibers and method of incorporating the hollow particles, and optionally forming other enclosed cavities, in the nonwoven material layer, in particular the method of bonding the hollow particles to the fibers comprised in the nonwoven material layer, the nonwoven material layer comprising hollow particles can be optimized to better survive subsequent processes, resulting in higher weight reduction in press lamination processes. In the subsequent steps of penetrating the nonwoven material layer with the first thermoplastic polymer resin, and optionally second thermoplastic polymer resin, the thermoplastic polymer resin materials and additives can be selected to optimize the core material and/or the fiber-reinforced product in respect of flexibility of the core material, lamination strength, impact strength, additional weight saving, and/or other functionalities, in particular improved impact resistance, improved damage tolerance, improved noise insulation and/or improved electrical insulation.

A weight reduction of the core material and/or of the fiber-reinforced product is obtained, while the core material preferably remains flexible. The first thermoplastic polymer resin penetrating into the first surface of the nonwoven material layer and the second thermoplastic polymer resin penetrating into the second surface of the nonwoven material layer can be selected to further improve the properties of the core material and/or of the fiber-reinforced product, in particular to increase the flexibility of the core material, bonding between the core material and skin material layers laminated to the core material, to improve the impact resistance of the core material and/or of the fiber-reinforced product, and/or to increase the biobased or recycled content of the thermoplastic resin in the core material and in the fiber-reinforced product.

The first thermoplastic polymer resin penetrating into the first surface of the nonwoven material layer and the second thermoplastic polymer resin optionally penetrating into the second surface of the nonwoven material layer may be selected independently from each other. The first thermoplastic polymer resin may be compatible with the second thermoplastic polymer resin. The first thermoplastic polymer resin and the second thermoplastic polymer resin may be polymer resins of the same polymer family. Preferably, the first thermoplastic polymer resin is identical to the second thermoplastic polymer resin.

The nonwoven material layer comprising fibers and hollow particles provided in the process may be a textile-based layer comprising expanded hollow particles and/or hollow spheres with a solid shell, for example from glass.

In the process, penetrating the first surface of the nonwoven material layer comprising fibers and hollow particles, and optionally other enclosed cavities, in particular a textile-based foam layer, with a first thermoplastic polymer resin, and optionally penetrating the second surface of the nonwoven material layer with a second thermoplastic polymer resin, ensures good molding into a fiber-reinforced product, preferably a fiber-reinforced thermoplastic product, and ensures sufficient integrity of the fiber-reinforced product comprising the core material enabling to reduce the weight of fiber-reinforced products, in particular of fiber-reinforced thermoplastic products.

The process may comprise the step of penetrating the first surface of the nonwoven material layer with a first molten thermoplastic polymer resin at a temperature of 100°C to 350°C, preferably 150°C to 250°C, and/or the step of penetrating the second surface of the nonwoven material layer with a second molten thermoplastic polymer resin at a temperature of 100°C to 350°C, preferably 150°C to 250°C.

The nonwoven material layer comprising fibers and hollow particles provided in the process is configured to withstand the pressures and temperatures during penetration with and/or melting of the first thermoplastic polymer resin and/or during penetration with and/or melting of the second thermoplastic polymer resin.

The process may comprise the step of penetrating the first surface of the nonwoven material layer with a first thermoplastic polymer resin at a pressure sufficient for the first thermoplastic polymer resin to penetrate into the nonwoven material layer and/or may comprise the step of penetrating the second surface of the nonwoven material layer with a second thermoplastic polymer resin at a pressure sufficient for the second thermoplastic polymer resin to penetrate into the nonwoven material layer without reducing the volume of the hollow particles and the optionally other enclosed cavities of the nonwoven material layer too much. The thickness of the core material penetrated with the first thermoplastic polymer resin and/or the second thermoplastic polymer resin may be at least 30%, or at least 50%, or at least 70%, or at least 80%, or at least 90%, or at least 95%, of the thickness of the nonwoven material layer prior to the penetration with the thermoplastic polymer resin(s).

The process may comprise the step of penetrating the first surface of the nonwoven material layer with a first molten thermoplastic polymer resin at a pressure sufficient for the first molten thermoplastic polymer resin to penetrate into the nonwoven material layer and/or may comprise the step of penetrating the second surface of the nonwoven material layer with a second molten thermoplastic polymer resin at a pressure sufficient for the second molten thermoplastic polymer resin to penetrate into the nonwoven material layer without reducing the volume of the hollow particles and the optionally enclosed other cavities in the nonwoven material layer too much. The thickness of the core material penetrated with the first molten thermoplastic polymer resin and/or the second molten thermoplastic polymer resin may be at least 30%, or at least 50%, or at least 70%, or at least 80%, or at least 90%, or at least 95%, of the thickness of the nonwoven material layer prior to the penetration with the molten thermoplastic polymer resin(s).

The nonwoven material layer comprising fibers and hollow particles provided in the process is configured to have sufficient openness to be penetrated with the first thermoplastic polymer resin, and/or the second thermoplastic polymer resin.

The nonwoven material layer comprising fibers and hollow particles provided in the process may be a textile-based layer comprising foamed hollow particles, in particular a nonwoven material layer comprising hollow particles selected from the group consisting of closed cell foam particles, hollow microspheres, inorganic hollow spheres, in particular hollow glass spheres or hollow ceramic spheres, clusters thereof, and/or any mixture thereof, wherein the hollow particles may comprise a mixture of hollow particles having different average diameters.

The hollow particles, preferably selected from the group consisting closed cell foam particles, hollow microspheres, inorganic hollow spheres, in particular hollow glass spheres or hollow ceramic spheres, clusters thereof, and/or any mixture thereof, may be configured to have sufficient temperature and pressure resistance to withstand the temperature during penetration with the first molten thermoplastic polymer resin and/or the second molten thermoplastic polymer resin, of preferably 100°C to 350°C , more preferably 150°C to 250°C, and subsequent processing pressures for laminating skin material layers onto the surfaces of the core material, preferably at a pressure of 2 to 5 bar, although the processing pressure may be higher than 5 bar. Suitable closed cell foam particles, hollow microspheres, and inorganic hollow spheres are readily available in the market, for example a product branded Expancel^{®} available from Nouryon, or Glass Bubbles available from 3M.

Between the hollow particles or clusters thereof, and optionally between other enclosed cavities, there are enough open spaces in the nonwoven material layer which can be penetrated with the first thermoplastic polymer resin and/or the second thermoplastic polymer resin.

The hollow particles in the nonwoven material layer may be distributed such as to form island structures of hollow particles, wherein each island structure may be composed of clusters of multiple hollow particles. The nonwoven material layer may comprise at least 1 island structures per 5 cm², or at least 1 island per 1 cm², or at least 10 island structures per cm², or at least 20 island structures per cm², or at least 30 island structures per cm², or at least 40 island structures per cm².

The island structures may constitute at least 10%, or at least 20%, or at least 30%, or at least 40%, or at least 50%, or at least 60% of the volume of the nonwoven material layer.

Nonwoven material layers comprising thermoplastic fibers and hollow particles, and having sufficient openness to be penetrated, are available in the market, for example a product called Soric^{®}, available from Lantor B.V. and are disclosed in EP 1010793, EP 1542845 and EP 3468780.

In the process, the steps of penetrating the first surface of the nonwoven material layer with a first thermoplastic polymer resin, and optionally penetrating the second surface of the nonwoven material layer with a second thermoplastic polymer resin, are configured such to obtain a high penetration depth of thermoplastic polymer into the nonwoven material layer. The penetration depth, as defined by the percentage of the thickness of the nonwoven material layer which is penetrated by the first and/or second polymer resin, in particular in the open spaces between the hollow particles, is determined by microscopic analysis, should be as high as possible. The penetration depth may be at least 50%, preferably at least 75%, more preferably at least 90%, more preferably at least 95%, most preferably at least 98%. The penetration depth may be 100%. A higher penetration depth provides improved adhesion between the first and/or second polymer resin and the hollow particles, and provides a higher compression resistance in the thickness direction of the core material, which is advantageous in subsequent laminating and molding processes. A higher penetration depth provides improved integrity of the core material and increases the shear resistance in laminates of the core material with one or more skin material layers.

The nonwoven material layer comprising fibers and hollow particles provided in the process is configured to have sufficient openness to be penetrated with the first thermoplastic polymer resin, and/or the second thermoplastic polymer resin.

In the process, the steps of penetrating the first surface of the nonwoven material layer with a first thermoplastic polymer resin, and optionally penetrating the second surface of the nonwoven material layer with a second thermoplastic polymer resin, are configured such to obtain a high penetration depth. However, the core material penetrated by the first thermoplastic polymer resin, and optionally the second thermoplastic polymer resin, may comprise some open spaces within the nonwoven material layer, which is not occupied by thermoplastic polymer resin, which enables to reduce weight of the core material. The number and size of open spaces within the nonwoven material layer penetrated by thermoplastic polymer resin determines the porosity of the core material. The core material may have a porosity of at most 20 vol.%, or at most 10 vol.%, or at most 7.5 vol.%, or at most 5 vol.%. The number and size of open spaces within the nonwoven material layer penetrated by thermoplastic polymer resin can for example be influenced by the viscosity of the thermoplastic polymer resin(s) and/or the construction of the nonwoven material, in particular the linear density of the fibers and the number and diameter of the hollow particles. Fibers having a lower linear density and a smaller diameter of the hollow particles will form smaller cavities in the nonwoven material layer which will be more difficult to penetrate with thermoplastic polymer resin.

Processes for laminating a skin material layer onto a surface of a porous core material are known. However, in these processes a polymer resin is required having a low melt viscosity to ensure sufficient impregnation of the polymer resin into the porous core material during the laminating process. When the polymer resin in these processes is a polypropylene (PP), then the Melt Flow Rate of the PP is preferably more than 10 g/10min at 230°C and at a load of 2.16 kg, in accordance with standard ISO 1033. Furthermore, the laminating pressure in these processes must be as low as possible to prevent the core material, in particular the hollow particles and/or enclosed cavities comprised in the nonwoven material layer comprised in the core material, from collapsing under the applied pressure and polymer penetration.

In the process, the first thermoplastic polymer resin penetrated into the first surface of the nonwoven material layer may have a flexural modulus of at most 1500 MPa, or at most 1250 MPa, or at most 1000 MPa to maintain the flexibility of the core material, which is advantageous in manufacturing and molding of the fiber-reinforced thermoplastic product, in particular when the nonwoven material layer has a thickness in the range of 1.0 mm to 2 mm, or 1.5 mm.

In the process, the second molten thermoplastic polymer resin penetrated into the second surface of the nonwoven material layer may have a flexural modulus of at most 1500 MPa, or at most 1250 MPa, or at most 1000 MPa to maintain the flexibility of the core material, which is advantageous in manufacturing and molding of the fiber-reinforced thermoplastic product, in particular when the nonwoven material layer has a thickness in the range of 1.0 mm to 2 mm, or 1.5 mm.

A flexural modulus of at most 1500 MPa, or at most 1250 MPa, or at most 1000 MPa enables that the core material can be rolled up, thereby facilitating easier processing in processes for manufacturing thin-walled fiber-reinforced products.

In the process, the first thermoplastic polymer resin penetrated into the first surface of the nonwoven material layer may, however, also have a flexural modulus of more than 1500 MPa, which enables to provide thin-walled fiber-reinforced products having increased stiffness, which preferably may be provided in sheet form.

In the process, the second thermoplastic polymer resin penetrated into the second surface of the nonwoven material layer may, however, also have a flexural modulus of more than 1500 MPa, which enables to provide thin-walled fiber-reinforced products having increased stiffness, which preferably may be provided in sheet form.

The process enables to be flexible in selection of the first molten thermoplastic polymer resin penetrated into the first surface of the nonwoven material and/or the second molten thermoplastic polymer resin penetrated into the second surface of the nonwoven material. The first thermoplastic polymer resin and/or the second thermoplastic polymer resin may each independently be selected.

The first thermoplastic polymer resin and/or the second thermoplastic polymer resin may be a polyolefin polymer resin, such as a polyethylene polymer resin or a polypropylene polymer resin, or a polyamide, such as a polyamide-6 polymer resin, a polyamide-6,6 polymer resin, a polyamide-11 polymer resin, a polyamide-12 polymer resin, or a co-polyamide polymer resin or, or a polyester polymer resin, such as a polyethylene terephthalate polymer resin, or a co-polyester polymer resin, or a thermoplastic epoxy polymer resin, or an ethylene-vinyl acetate polymer resin, or a thermoplastic polyurethane polymer resin, or a polylactic acid polymer resin, or a polybutylene adipate terephthalate polymer resin, or a polybutylene succinate polymer resin, or a polyhydroxyalkanoate polymer resin, or any copolymer or any blend thereof, which can for example be advantageously provide improved bonding to common polypropylene based, polyamide based, polycarbonate based or biopolymer based fiber-reinforced skin material layers and/or provide increased biobased content in the core material.

The first polymer resin and/or the second polymer resin may each independently be selected to provide further improved properties, such as but not limited to increased impact resistance, improved flexibility of the core material, increased recycled content, biobased content and/or improved flame retardancy.

The first polymer resin and/or the second polymer resin may each independently comprise additives to provide further improved properties, such as but not limited to increased impact resistance, improved flexibility, lower density of the core material and/or improved flame retardancy.

The first polymer resin and/or the second polymer resin may each independently comprise processing aids, such as wetting agents and coupling agents, to improve the penetration depth and/or the penetration speed.

The first polymer resin and/or the second polymer resin may each independently comprise further hollow particles, for example glass microspheres or polymer type microspheres, for additional weight reduction of the core material.

The core material provided by the process may have a thickness of at most 3 mm, or at most 2.5 mm, or at most 2.0 mm, or a most 1.5 mm, or at most 1.0 mm.

The core material provided by the process may have a thickness of at least 0.5 mm, or at least 1.0 mm, or at least 1.5 mm, or at least 2.0 mm.

The process may include the step of cutting the core material into sheets of predetermined dimensions.

The process may include the step of winding the core material onto a roll, as the core material may be flexible enough to be wound on a roll.

In the process, the first thermoplastic polymer resin and/or the second thermoplastic polymer resin, in particular in the case of polyolefins, may each independently have a melt flow rate of at least 10 g/10 min, preferably at least 30 g/10 min, preferably at least 50 g/10 min, at 230°C and a load of 2.16 kg, determined in accordance with standard ISO 1033. In case the first thermoplastic polymer resin and/or the second thermoplastic polymer resin is penetrated in a solid state, e.g. as a powder, the penetration depth is less dependent on the viscosity and the melt flow rates may be lower.

Also provided is a process for manufacturing thin-walled fiber-reinforced products comprising the steps of providing a core material, obtainable or obtained by the process for manufacturing a core material for thin-walled fiber-reinforced products according to the invention as disclosed herein above, between a first skin material layer and a second skin material layer and adhering the core material to the first skin material layer and the second skin material layer by application of heat and pressure.

The process for manufacturing thin-walled fiber-reinforced products may comprise the step of providing more than one core materials comprising a nonwoven material layer comprising fibers and hollow particles, and optionally other enclosed cavities. The process for manufacturing thin-walled fiber-reinforced products may comprise the step of providing at least two, or at least three, or at least four, or at least five core materials comprising a nonwoven material layer comprising fibers and hollow particles, and optionally other enclosed cavities, preferably stacked onto one another.

The process for manufacturing thin-walled fiber-reinforced products may comprise the step of bonding more than one core materials comprising a nonwoven material layer comprising fibers and hollow particles to each other, preferably by the thermoplastic polymer resin(s) penetrated into each of the core materials.

Also a core material for thin-walled fiber-reinforced products is provided obtainable by the process as disclosed herein, including any combination of embodiments thereof, the core material comprising a nonwoven material layer having a first surface and a second surface, the nonwoven material layer comprising fibers and hollow particles, and the optionally other enclosed cavities, and a first thermoplastic polymer penetrated into the first surface of the nonwoven material layer, and optionally a second molten thermoplastic polymer penetrated into the second surface of the nonwoven material layer.

Furthermore, a laminate is provided comprising the core material provided between a first skin material layer and a second skin material layer, wherein the core material is adhered to the first skin material layer and to the second skin material layer by application of heat and pressure.

The first and second skin material layers comprised in the laminate may comprise, one or more reinforcement layers or other functional layers. The first skin material layer and/or second skin material layer may comprise at least 2 reinforcement layers, or at least 4 reinforcement layers, or at least 6 reinforcement layers, or at least 8 reinforcement layers.

A thin-walled fiber-reinforced product is also provided comprising the core material or the laminate, which has been molded into a predetermined shape. Preferably, the thin-walled fiber-reinforced product is a thin-walled fiber-reinforced thermoplastic product, molded into a predetermined shape.

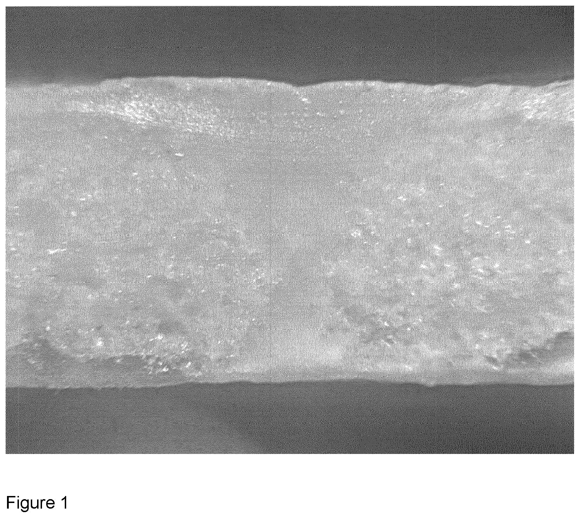

Figure 1 is a photograph of a cross section of a core material comprising a nonwoven material layer, having a thickness of 1.5 mm, comprising fibers and hollow particles provided in 40 island structures of hollow particles per cm², the hollow particles constituting 40% of the volume of the nonwoven material layer, wherein the first surface of the nonwoven material layer is penetrated with a first molten polypropylene polymer resin having a MFR of 70 g/10 min at 230°C and a load of 2.16 kg. The second surface of the nonwoven material layer is penetrated with a second molten polypropylene polymer resin, which is identical the first molten polypropylene polymer resin. The penetration depth is close to 100%.

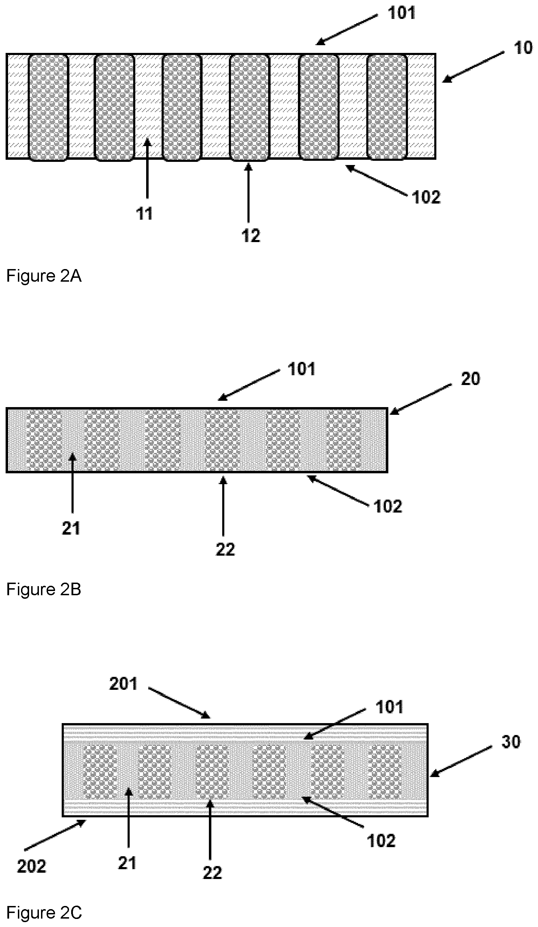

Figure 2A schematically depicts an embodiment of a nonwoven material layer (10) having a first surface (101) and a second surface (102). The nonwoven material layer (10) comprises areas comprising fibers (11) and hollow particles (12). The first surface (101) of the nonwoven material layer (10) can be penetrated with a first thermoplastic polymer resin and the first thermoplastic polymer resin can be melted and solidified to form a core material.

Figure 2B schematically depicts a core material (20) comprising the nonwoven material layer (10) of Figure 2A, which in this figure has been compressed to reduce the thickness of the nonwoven material layer in the core material (20). Thermoplastic polymer resin has penetrated the nonwoven material layer between the fibers (21) and between the hollow particles (22), in particular the areas comprising fibers (21).

Figure 2C schematically depicts a laminate (30) comprising the core material (20) of Figure 2B, between a first skin material layer (201) and a second skin material layer (202), wherein the core material has been adhered to the first skin material layer (201) and to the second skin material layer (202) by application of heat and pressure. The laminate (30) can then be molded into a predetermined three-dimensional shape to provide a thin-walled fiber-reinforced product.

### Examples

In examples 1 to 3 a nonwoven material layer is provided comprising polyester staple fibers and Expancel^{®} hollow microspheres as hollow particles chemicaly bonded to the staple fibers.

In example 1, the first surface of the nonwoven material layer is penetrated with a first thermoplastic polypropylene polymer resin, and the second surface of the nonwoven material layer is penetrated with a second thermoplastic polypropylene polymer resin, wherein the second thermoplastic polypropylene polymer resin is the same as the first thermoplastic polypropylene polymer resin. The molten first thermoplastic polypropylene polymer resin is extrusion coated onto and penetrated into the first surface of the nonwoven material layer, and the second thermoplastic polypropylene polymer resin is extrusion coated onto and penetrated into the second surface of the nonwoven material layer. The molten first thermoplastic polymer polypropylene resin and the second thermoplastic polymer polypropylene resin are solidified to form the core material. The core material of example 1 has a weight of 475 g/m² and a thickness of 1.0 mm, and having a density of 475 kg/m³.

In example 2, the first surface of the nonwoven material layer is penetrated with a first thermoplastic polyamide-11 polymer resin as a powder, and the second surface of the nonwoven material layer is penetrated with a second thermoplastic polyamide-11 polymer resin as a powder, wherein the second thermoplastic polyamide-11 polymer resin is the same as the first thermoplastic polyamide-11 polymer resin. The first thermoplastic polyamide-11 polymer resin in powder form and the second thermoplastic polyamide-11 polymer resin in powder form are melted, and subsequently solidified to form the core material. The core material of example 2 has a weight of 450 g/m² and a thickness of 1.5 mm, and having a density of 300 kg/m³.

In example 3, the first surface of the nonwoven material layer is penetrated with a first thermoplastic polyamide-11 polymer resin as a powder, the powder comprising 20% of hollow glass spheres, and the second surface of the nonwoven material layer is penetrated with a second thermoplastic polyamide-11 polymer resin as a powder, the powder comprising 20% of hollow glass spheres, wherein the second thermoplastic polyamide-11 polymer resin is the same as the first thermoplastic polyamide-11 polymer resin. The first thermoplastic polyamide-11 polymer resin in powder form and the second thermoplastic polyamide-11 polymer resin in powder form are melted, and subsequently solidified to form the core material. The core material of example 2 has a weight of 360 g/m² and a thickness of 1.8 mm, and having a density of 200 kg/m³.

In comparable example 1, a laminate is provided comprising 4 unidirectional layers of glass filaments, oriented at 0°/90°/90°/0°, impregnated with a polypropylene resin, and thermopressed at a pressure of 2 bar. The laminate has a thickness of 0.9 mm and a density of 1522 kg/m³.

In comparable example 2, a laminate is provided comprising 8 unidirectional layers of glass filaments impregnated with a polypropylene resin. The laminate has a thickness of 1.5 mm and has a weight increase of 100% as compared to the laminate of comparable example 1.

In example 4, a laminate is provided comprising the core material of example 1 wherein the core material is adhered to a first skin material layer and to a second skin material layer, and thermopressed at a pressure of 2 bar, the first skin material layer and the second skin material layer being a unidirectional layer of glass filaments impregnated with a polypropylene resin. The laminate has a thickness of 1.2 mm and a density of 975 kg/m³.

In example 5, a laminate is provided comprising two layers of the core material of example 1 stacked onto each other and adhered to a first skin material layer and to a second skin material layer, and thermopressed at a pressure of 2 bar, the first skin material layer and the second skin material layer being a unidirectional layer of glass filaments impregnated with a polypropylene resin. The laminate has a thickness of 2.1 mm and has a weight increase of only 40% as compared to comparable example 1.

In comparable example 3, a laminate is provided comprising 2 organosheet layers of woven glass fabric impregnated with a polyamide resin, and thermopressed at a pressure of 5 bar. The laminate has a thickness of 0.8 mm and a density of 2100 kg/m³.

In example 6, a laminate is provided comprising the core material of example 2 wherein the core material is adhered to a first skin material layer and to a second skin material layer, and thermopressed at a pressure of 5 bar, the first skin material layer and the second skin material layer being a single organosheet layer of woven glass fabric impregnated with a polyamide resin. The laminate has a thickness of 1.3 mm and a density of 1625 kg/m³.

In example 7, a laminate is provided comprising the core material of example 3 wherein the core material is adhered to a first skin material layer and to a second skin material layer, and thermopressed at a pressure of 5 bar, the first skin material layer and the second skin material layer being a single organosheet layer of woven glass fabric impregnated with a polyamide resin. The laminate of example 6 has a thickness of 1.5 mm and a density of 1400 kg/m³.

## Claims

1. A process for manufacturing a core material for thin-walled fiber-reinforced products comprising the steps of providing a nonwoven material layer (10) having a first surface (101) and a second surface (102), the nonwoven material layer (10) comprising fibers (11) and hollow particles (12), and optionally other enclosed cavities, penetrating the first surface (101) of the nonwoven material layer (10) with a first thermoplastic polymer resin, melting the first thermoplastic polymer resin, and solidifying the molten first thermoplastic polymer resin to form the core material (20).

2. The process according to claim 1, comprising the steps of penetrating the second surface (102) of the nonwoven material layer (10) with a second thermoplastic polymer resin, melting the second thermoplastic polymer resin, and solidifying the molten second thermoplastic polymer resin.

3. The process according to any one or more of the preceding claims, comprising the steps of melting the first thermoplastic polymer resin, subsequently penetrating the first surface (101) of the nonwoven material layer (10) with the molten first thermoplastic polymer resin, and solidifying the molten first thermoplastic polymer resin.

4. The process according to claim 3, comprising the step of providing a first film comprising the first thermoplastic polymer to the first surface (101) of the nonwoven material layer (10).

5. The process according to claim 3, comprising the step of extrusion coating the first surface (101) of the nonwoven material layer (10) with a molten first thermoplastic polymer.

6. The process according to any one or more of the preceding claims, comprising the steps of melting the second thermoplastic polymer resin, subsequently penetrating the second surface (102) of the nonwoven material layer (10) with the molten second thermoplastic polymer resin, and solidifying the molten second thermoplastic polymer resin.

7. The process according to claim 6, comprising the step of providing a second film comprising the second thermoplastic polymer to the second surface (102) of the nonwoven material layer (10).

8. The process according to claim 6, comprising the step of extrusion coating the second surface (102) of the nonwoven material layer (10) with a molten second thermoplastic polymer.

9. The process according to claim 1, comprising the steps of penetrating the first surface (101) of the nonwoven material layer (10) with the first thermoplastic polymer resin in a solid state, preferably with the first thermoplastic polymer resin as a powder, subsequently melting the first thermoplastic polymer resin penetrated into the first surface (101) of the nonwoven material layer (10), and solidifying the molten first thermoplastic polymer resin.

10. The process according to any one or more of claims 2 and 9, comprising the steps of penetrating the second surface (102) of the nonwoven material layer (10) with the second thermoplastic polymer resin in a solid state, preferably with the second thermoplastic polymer resin as a powder, subsequently melting the second thermoplastic polymer resin penetrated into the second surface (102) of the nonwoven material layer (10), and solidifying the molten second thermoplastic polymer resin.

11. The process according to any one or more of the preceding claims,
wherein the nonwoven material layer (10) comprising fibers (11) and hollow particles (12) has a thickness of at least 0.5 mm and at most 3.0 mm.

12. A core material (20) for thin-walled fiber-reinforced products obtainable by the process according to any one or more of the preceding claims comprising a nonwoven material layer (10) having a first surface (101) and a second surface (102), the nonwoven material layer (10) comprising fibers (11) and hollow particles (12), and optionally other enclosed cavities, and a first thermoplastic polymer penetrated into the first surface (101) of the nonwoven material layer (10), and optionally a second molten thermoplastic polymer penetrated into the second surface (102) of the nonwoven material layer (10).

13. A process for manufacturing thin-walled fiber-reinforced products comprising the steps of providing a core material (20) according to claim 12 between a first skin material layer (201) and a second skin material layer (202) and adhering the core material (20) to the first skin material layer (201) and the second skin material layer (202) by application of heat and pressure.

14. A laminate (30) comprising the core material (20) according to claim 12 between a first skin material layer (201) and a second skin material layer (202), wherein the core material (20) is adhered to the first skin material layer (201) and to the second skin material layer (202) by application of heat and pressure.

15. A thin-walled fiber-reinforced product comprising the core material
according to claim 12 or the laminate (30) according to claim 14, molded into a predetermined three-dimensional shape.
